# EUROPEAN PATENT APPLICATION

(11) **EP 4 803 974 A1**
(43) Date of publication of application: **09.09.2026**
(21) Application number: 26162433.2
(22) Date of filing: 04.03.2026
(51) Int. Cl.: G06F 1/16, H04M 1/02

(54) **ELECTRONIC DEVICE**

(30) Priority: 06.03.2025 KR 20250028912; 17.06.2025 KR 20250079545
(71) Applicant: Samsung Display Co., Ltd., Yongin-si, Gyeonggi-do 17113 (KR)
(72) Inventor: HWANG, Se Ja Chul, Yongin-si (KR); KIM, Sung Mu, Yongin-si (KR)
(74) Representative: Marks & Clerk LLP

(57) **Abstract**

An electronic device includes a display module including a plurality of folding areas and non-folding areas, at least one housing, which supports the display module, and a cover module, which covers at least one of the plurality of folding areas when the display module is in a folded state.

## Description

### BACKGROUND

### 1. Field of the Disclosure

The present disclosure relates to an electronic device.

### 2. Description of the Related Art

As the information-oriented society evolves, various demands for display devices are ever increasing. For example, display devices are being employed by a variety of electronic devices such as smart phones, digital cameras, laptop computers, navigation devices, and smart televisions.

Recently, in order to increase portability of the display device and provide a wider display screen, a bendable display device in which the display area can be bent, or a foldable display device in which the display area can be folded is being released.

### SUMMARY

Aspects of the present disclosure provide an electronic device that can prevent an exposed folding area of a display module from being damaged by external impact.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an aspect of the present disclosure, an electronic device includes a display module including a plurality of folding areas and non-folding areas, at least one housing, which supports the display module, and a cover module, which covers at least one of the plurality of folding areas when the display module is in a folded state.

The plurality of non-folding areas may include a first non-folding area, a second non-folding area, and a third non-folding area, where the plurality of folding areas may include a first folding area located between the first non-folding area and the second non-folding area, and a second folding area located between the second non-folding area and the third non-folding area, the at least one housing may include a plurality of housings, and the plurality of housings may include a first housing, which supports the first non-folding area, a second housing, which supports the second non-folding area, and a third housing, which supports the third non-folding area.

When the display module is in the folded state, the third non-folding area may be exposed to an outside and the second folding area may be out-folded, and the cover module may cover the second folding area when the display module is in the folded state, and the cover module does not cover the second folding area when the display module is in an unfolded state.

The cover module may include a first cover member, which moves from an inside of the first housing to an outside of the first housing to cover the second folding area when the display module is changed from the unfolded state to the folded state, and a driver, which is located inside the first housing and moves the first cover member from the inside of the first housing to the outside of the first housing.

The cover module may further include a second cover member connected to the driver, and a rotation member arranged between the first cover member and the second cover member and which rotates the first cover member.

The driver may move the first cover member to the outside of the first housing when the display module is changed from the unfolded state to the folded state, and the rotation member may rotate the first cover member when the first cover member is outside the first housing such that the first cover member covers the second folding area.

The driver may move the first cover member to the outside of the first housing when the display module is changed from the unfolded state to the folded state, and the rotation member may rotate the first cover member when the first cover member is outside the first housing such that the first cover member is rotated toward the first housing.

The cover module may include a module housing located on a side surface of the first housing, a first cover member, which moves from an inside of the module housing to an outside of the module housing to cover the second folding area when the display module is changed from the unfolded state to the folded state, and a main driver, which is arranged inside the module housing and moves the first cover member from the inside of the module housing to the outside of the module housing.

The cover module may further include a second cover member connected to the main driver, and a rotation member arranged between the first cover member and the second cover member and which rotates the first cover member.

The cover module may further include a first wire connected to the first cover member, a first auxiliary driver arranged inside the module housing and connected to the first wire to pull the first wire, a second wire connected to the first cover member, and a second auxiliary driver arranged inside the module housing and connected to the second wire to pull the second wire.

The first wire may be connected to a first surface of the first cover member, and the second wire may be connected to a second surface of the first cover member opposite to the first surface.

The main driver may move the first cover member to the outside of the module housing when the display module is changed from the unfolded state to the folded state, and the rotation member may rotate the first cover member when the first cover member is outside the first housing such that the first cover member covers the second folding area.

The main driver may move the first cover member to the outside of the module housing while the first auxiliary driver is pulling the first wire, and the first cover member may be rotated when the second auxiliary driver pulls the second wire.

The first auxiliary driver may release the first wire while the second auxiliary driver is pulling the second wire.

The side surface of the first housing on which the module housing is located may intersect the first folding area.

The first cover member may have a length substantially equal to a length of the second folding area.

The module housing may have a height substantially equal to a thickness from a bottom of the first housing to a top of the display module in the third non-folding area when the display module is in the folded state.

The cover module may include a first cover member, which covers the second folding area when the display module is in the folded state, and a second cover member, which covers a part of a side surface of the first housing that intersects the first folding area.

The first cover member may have a length substantially equal to a length of the second folding area, and the first cover member may have a height substantially equal to a thickness from a bottom of the first housing to a top of the display module in the third non-folding area when the display module is in the folded state.

The second cover member may further cover a part of a side surface of each of the second housing and the third housing that intersects the second folding area when the display module is in the folded state, and the second cover member may have a height substantially equal to a thickness from a bottom of the first housing to a top of the display module in the third non-folding area.

At least some of the above and other features of the invention are set out in the claims.

According to an embodiment of the present disclosure, when a display module of an electronic device is folded, a cover module covers a folding area of the display module exposed to the outside, so that it is possible to effectively prevent the folding area of the display module exposed to the outside from being damaged by external impact.

The effects according to the embodiments of the present disclosure are not limited to those mentioned above and more various effects are included in the following description of the present disclosure.

### BRIEF DESCRIPTION OF THE DRAWINGS

The above and other aspects and features of the present disclosure will become more apparent by describing in detail example embodiments thereof with reference to the attached drawings, in which:
FIG. 1 is a perspective view showing an electronic device according to a first embodiment of the present disclosure when it is unfolded.
FIG. 2 is a side view of the electronic device shown in FIG. 1.
FIG. 3 is a perspective view showing the electronic device according to the first embodiment of the present disclosure when it is folded.
FIG. 4 is a side view of the electronic device shown in FIG. 3.
FIG. 5 is a cross-sectional view showing a part of the cover module of the electronic device according to the first embodiment of the present disclosure.
FIGS. 6 to 8 are views showing the operating state of the cover module of FIG. 5.
FIG. 9 is a view showing the cover module of the electronic device according to the first embodiment when it is used as a stand.
FIG. 10 is a perspective view showing an electronic device according to a second embodiment of the present disclosure when it is unfolded.
FIG. 11 is a perspective view showing the electronic device according to the second embodiment of the present disclosure when it is folded.
FIG. 12 is a cross-sectional view showing a part of the cover module of the electronic device according to the second embodiment of the present disclosure.
FIGS. 13 to 15 are views showing an operating state of the cover module of FIG. 12.
FIG. 16 is a perspective view showing the electronic device according to a third embodiment of the present disclosure when it is folded.
FIG. 17 is a side view of the electronic device shown in FIG. 16.
FIG. 18 is a block diagram of an electronic device according to an embodiment of the present disclosure.

### DETAILED DESCRIPTION

Advantages and features of the present disclosure and methods to achieve them will become apparent from the descriptions of example embodiments hereinbelow with reference to the accompanying drawings. However, the present disclosure is not limited to example embodiments disclosed herein but may be implemented in various different ways. The example embodiments are provided for making the disclosure of the present disclosure thorough and for fully conveying the scope of the present disclosure to those skilled in the art. It is to be noted that the scope of the present disclosure is defined only by the claims.

As used herein, a phrase "an element A on an element B" refers to that the element A may be disposed directly on the element B and/or the element A may be disposed indirectly on the element B via another element C. Like reference numerals denote like elements throughout the descriptions. The figures, dimensions, ratios, angles, numbers of elements given in the drawings are merely illustrative and are not limiting.

Although terms such as "first", "second", etc. are used to distinguish arbitrarily between the elements such terms describe, and thus these terms are not necessarily intended to indicate temporal or other prioritization of such elements. These terms are used to merely distinguish one element from another. Accordingly, as used herein, a first element may be a second element within the technical scope of the present disclosure.

Features of various example embodiments of the present disclosure may be combined partially or totally. As will be clearly appreciated by those skilled in the art, technically various interactions and operations are possible. Various example embodiments can be practiced individually or in combination.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

"About" or "substantially equal" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially equal" can mean within one or more standard deviations, or within ± 10%, 5% or 2% of the stated value.

Hereinafter, example embodiments of the present disclosure will be described in detail with reference to the accompanying drawings.

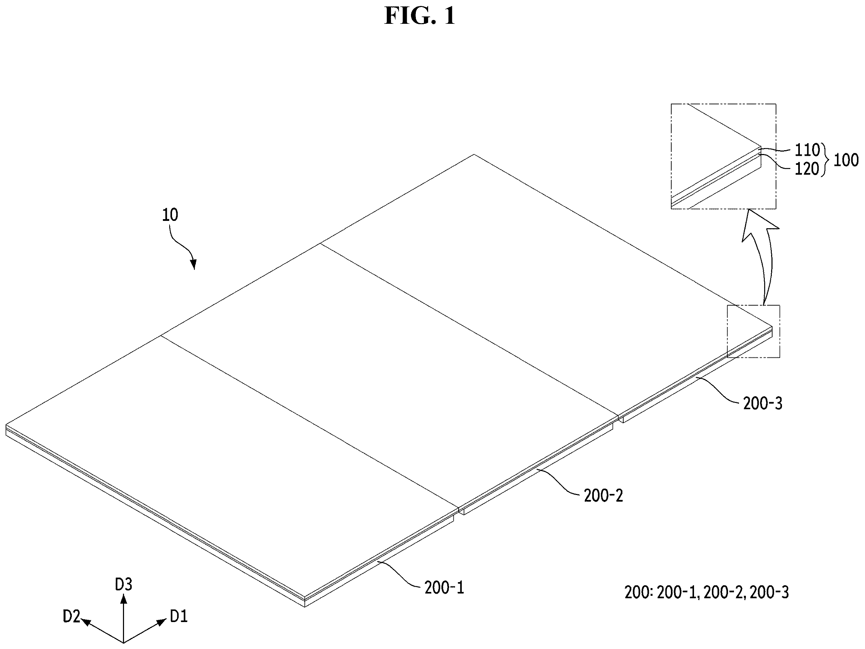

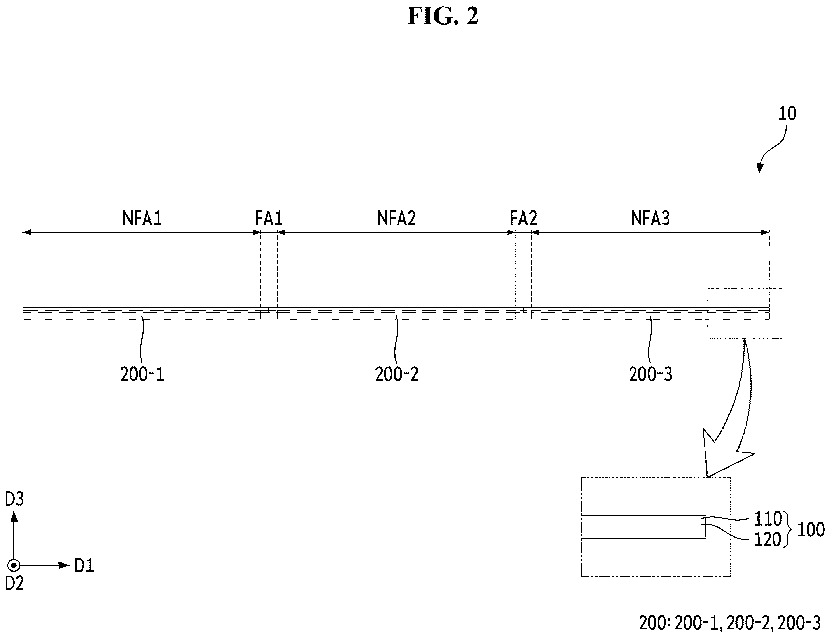

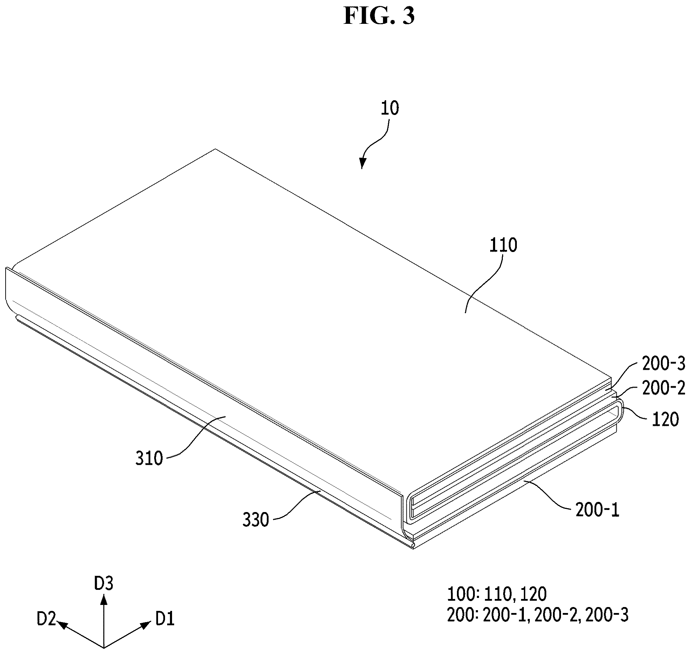

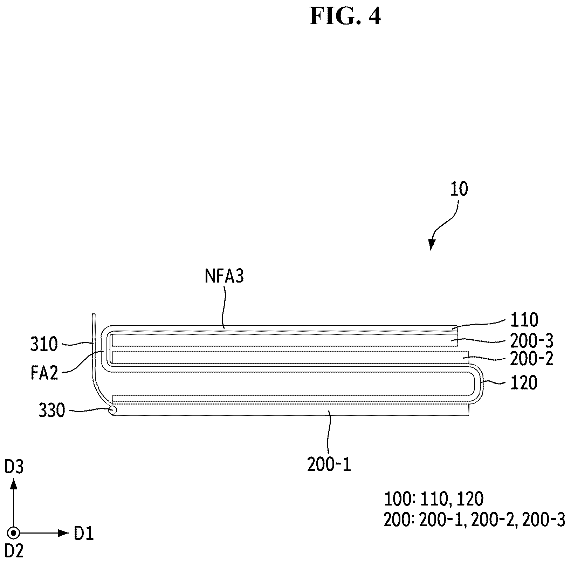

FIG. 1 is a perspective view showing an electronic device according to a first embodiment of the present disclosure when it is unfolded. FIG. 2 is a side view of the electronic device shown in FIG. 1. FIG. 3 is a perspective view showing the electronic device according to the first embodiment of the present disclosure when it is folded. FIG. 4 is a side view of the electronic device shown in FIG. 3.

Referring to FIGS. 1 to 4, FIGS. 1 and 2 show a first state in which the electronic device 10 is unfolded without being folded at folding areas FA1 and FA2, and FIGS. 3 and 4 show a second state in which the electronic device 10 is folded at the folding areas FA1 and FA2.

An electronic device 10 according to the embodiment of the present disclosure is for displaying moving images or still images. The electronic device 10 may be applied to portable electronic devices such as a mobile phone, a smart phone, a tablet PC, a smart watch, a watch phone, a mobile communications terminal, an electronic notebook, an electronic book, a portable multimedia player (PMP), a navigation device and a ultra mobile PC (UMPC), as well as various products such as a television, a notebook, a monitor, a billboard and the Internet of Things.

In FIGS. 1 to 4, a first direction D1 may refer to a direction parallel to a side of the electronic device 10, for example, the horizontal direction of the electronic device 10 when viewed from the top. A second direction D2 may refer to a direction parallel to another side of the electronic device 10 that meet the side of the electronic device 10, for example, the vertical direction of the electronic device 10 when viewed from the top. A third direction D3 may refer to the thickness direction of the electronic device 10.

The electronic device 10 may have a quadrangular shape, such as a rectangular shape when viewed from the top. Each of the corners of the electronic device 10 may form a right angle or may be rounded when viewed from the top. The front surface of the electronic device 10 may include two longer sides extended in the first direction D1 and two shorter sides extended in the second direction D2.

The electronic device 10 according to the first embodiment of the present disclosure may include a display module 100, a housing 200, and a cover module 300.

The display module 100 may include a display area and a non-display area. The shape of the display area may follow the shape of the electronic device 10 when viewed from the top. For example, when the electronic device 10 has a rectangular shape when viewed from the top, the display area may also have a rectangular shape when viewed from the top.

The display area may include a plurality of pixels to display images. The non-display area may not include pixels and thus may not display images. The non-display area may be located around the display area. The non-display area may surround the display area, but the embodiments of the present disclosure are not limited thereto. The display area may be partially surrounded by the non-display area.

The display module 100 may include a first folding area FA1, a second folding area FA2, a first non-folding area NFA1, a second non-folding area NFA2, and a third non-folding area NFA3. At the first folding area FA1 and the second folding area FA2, the display module 100 may be bent or folded. At the first non-folding area NFA1, the second non-folding area NFA2 and the third non-folding area NFA3, the display module 100 may not be bent or folded. According to the embodiment of the present disclosure, the first non-folding area NFA1, the second non-folding area NFA2 and the third non-folding area NFA3 may be flat areas of the display module 100.

The first non-folding area NFA1 may be located on one side of the first folding area FA1, e.g., the left side in FIG. 2. The second non-folding area NFA2 may be located on the opposite side of the first folding area FA1, e.g., the right side in FIG. 2. The second folding area FA2 may be located on the opposite side of the second non-folding area NFA2, e.g., the right side in FIG. 2. The third non-folding area NFA3 may be located on the opposite side of the second folding area FA2, e.g., the right side in FIG. 2.

When the display module 100 is folded, the first non-folding area NFA1 and the second non-folding area NFA2 may face each other, and the third non-folding area NFA3 may be exposed to the outside of the electronic device 10. The first folding area FA1 may not be exposed to the outside of the electronic device 10 by a panel support member 120 to be described later (this state is referred to "in-folded"), while the second folding area FA2 may be exposed to the outside of the electronic device 10 (this state is referred to "out-folded").

The first folding area FA1 and the second folding area FA2 may be extended in the second direction D2, as shown in FIGS. 1 and 2. In this instance, the display module 100 may be folded at lines in the second direction D2. Accordingly, the length of the electronic device 10 in the first direction D1 may be reduced to approximately one-third, so that the electronic device 10 is easy to carry.

The display module 100 may include a display panel 110 and a panel support member 120.

The display panel 110 may have a rectangular shape having longer sides in the first direction D1 and shorter sides in the second direction D2 when viewed from the top. In the display panel 110, the corners where the longer sides in the first direction D1 meet the shorter sides in the second direction D2 may be formed at a right angle or may be rounded with a predetermined curvature. The display panel 110 may have a quadrangular shape other than a rectangle, a polygonal shape other than a quadrangular shape, a circular shape, an oval shape, or an irregular shape when viewed from the top.

The display panel 110 may include a display area where a plurality of emission areas that emits light is arranged, and a non-display area disposed around the display area. The non-display area may surround the display area. A plurality of display pads may be disposed in the non-display area at one edge of the display panel 110.

The display panel 110 may include a cover window, a substrate, a display unit, a sensor unit, and a polarizing film.

The cover window may include a material having high light transmittance. The cover window may include a polymer resin such as polyimide or glass. The cover window may be attached onto the polarizing film by an adhesive member such as an optically clear adhesive (OCA) film.

The substrate may be made of an insulating material such as glass, quartz and polymer resin. The substrate may be a rigid substrate or a flexible substrate that can be bent, folded, rolled, and so on.

The display unit may be placed on the substrate. The display unit may be a layer including a plurality of emission areas for outputting light. The display unit may include a buffer film, a thin-film transistor layer on which thin-film transistors are disposed, a light-emitting element layer that emits light, and an encapsulating layer for encapsulating the light-emitting element layer.

The sensor unit may be placed on the display unit. The sensor unit may include sensor electrodes and may sense whether there is a user's touch.

The polarizing film may be placed on the sensor unit. The polarizing film can prevent the deterioration of image visibility of the display panel 110 due to reflection of external light. The polarizing film may include a linear polarizer and a phase retardation film such as a λ/4 (quarter-wave) plate. The phase retardation film may be placed on the sensor unit, and the linear polarizer may be placed on the phase retardation film. The cover window may be placed on the polarizing film.

The panel support member 120 may be located under the substrate. The panel support member 120 may be attached to the lower surface of the substrate by an adhesive member. The adhesive member may be a pressure-sensitive adhesive (PSA). The panel support member 120 may include at least one of: a light-absorbing member for absorbing light incident from outside, a buffer member for absorbing external impact, and a heat dissipating member for efficiently discharging heat from the display panel 110.

The light-absorbing member may be placed under the substrate. The light-absorbing member blocks the transmission of light to prevent the elements disposed thereunder from being seen from above the display panel 110, such as the display circuit board (not shown). The light-absorbing member may include a light-absorbing material such as a black pigment and a black dye.

The buffer member may be located under the light-absorbing member. The buffer member absorbs an external impact to prevent the display panel 110 from being damaged. The buffer member may be made up of a single layer or multiple layers. For example, the buffer member may be formed of a polymer resin such as polyurethane, polycarbonate, polypropylene and polyethylene, or may be formed of a material having elasticity such as a rubber and a sponge obtained by foaming a urethane-based material or an acrylic-based material.

The heat dissipating member may be located under the buffer member. The heat dissipation member may include a first heat dissipation layer including graphite or carbon nanotubes, and a second heat dissipation layer formed of a thin metal film such as copper, nickel, ferrite and silver, which can block electromagnetic waves and have high thermal conductivity.

The housing 200 may support the display module 100. The housing 200 may form a part of the exterior of the electronic device 10. The housing 200 may be formed to surround the internal elements of the electronic device 10 excluding the cover window of the display module 100. In some embodiments, the housing 200 can protect the display module 100 from external impact by covering the internal electronic components of the display module 100 to support the display module 100.

There may be a plurality of housings 200. The plurality of housings 200 may support the first non-folding area NFA1, the second non-folding area NFA2 and the third non-folding area NFA3 of the display module 100, respectively. The plurality of housings 200 may include a first housing 200-1, a second housing 200-2, and a third housing 200-3.

The first housing 200-1 may support the first non-folding area NFA1 of the display module 100. For example, the first housing 200-1 may be located under the first non-folding area NFA1 in FIG. 2 to support the first non-folding area NFA1. The first housing 200-1 may be exposed to the outside of the electronic device 10 when the electronic device 10 is folded.

The second housing 200-2 may support the second non-folding area NFA2 of the display module 100. For example, the second housing 200-2 may be located under the second non-folding area NFA2 in FIG. 2 to support the second non-folding area NFA2. The second housing 200-2 may not be exposed to the outside of the electronic device 10 when the electronic device 10 is folded.

The third housing 200-3 may support the third non-folding area NFA3 of the display module 100. For example, the third housing 200-3 may be located under the third non-folding area NFA3 in FIG. 2 to support the third non-folding area NFA3. The third housing 200-3 may not be exposed to the outside of the electronic device 10 when the electronic device 10 is folded.

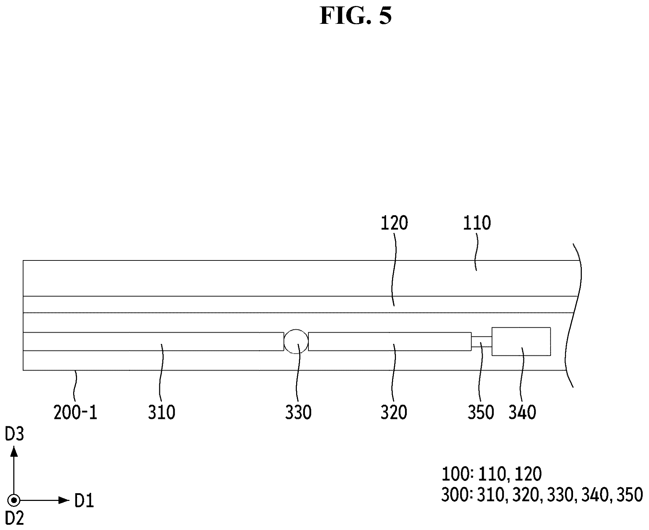

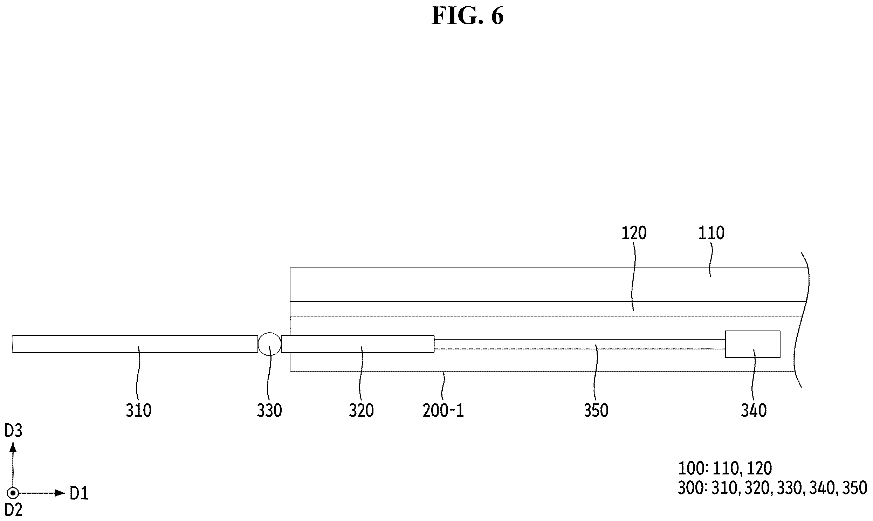

FIG. 5 is a cross-sectional view showing a part of the cover module of the electronic device according to the first embodiment of the present disclosure. FIGS. 6 to 8 are views showing the operating state of the cover module of FIG. 5.

Referring further to FIGS. 5 to 8, the cover module 300 may cover at least one of the plurality of folding areas FA1 and FA2. For example, the cover module 300 may cover the second folding area FA2 when the display module 100 is folded.

The cover module 300 may include a first cover member 310, a second cover member 320, a rotation member 330, and a driver 340.

The first cover member 310 may be moved from the inside of the first housing 200-1 to the outside of the first housing 200-1. The first cover member 310 may be provided as a plate having a predetermined thickness. The length of the first cover member 310 in the third direction D3 may be substantially equal to the thickness from the bottom of the first housing 200-1 to the top of the display module 100 in the third non-folding area NFA3 in the third direction D3 when the display module 100 is folded. The length of the first cover member 310 in the second direction D2 may be substantially equal to the length of the second folding area FA2 in the second direction D2.

The second cover member 320 may be connected to the first cover member 310 by the rotation member 330. The second cover member 320 may be placed inside the first housing 200-1. The second cover member 320 may be connected to a driving shaft 350 of the driver 340.

The rotation member 330 may be located between the first cover member 310 and the second cover member 320 to connect between the first cover member 310 and the second cover member 320. The rotation member 330 may connect the first cover member 310 with the second cover member 320 so that the first cover member 310 is rotatable.

The driver 340 may be placed inside the first housing 200-1. The driving shaft 350 of the driver 340 may be connected to the second cover member 320. The driver 340 may move the first cover member 310 from the inside to the outside of the first housing 200-1. The driver 340 may be implemented as a linear motor or a linear actuator.

The operation of the cover module 300 will be described. When the display module 100 is unfolded, the first cover member 310 is located inside the first housing 200-1, as shown in FIG. 5. When the display module 100 is folded, as shown in FIG. 6, the driver 340 is operated so that the driving shaft 350 is moved to the left side of FIG. 6. As the driving shaft 350 is moved, the second cover member 320 connected to the driving shaft 350 is moved to the left side of FIG. 6, and accordingly, the first cover member 310 is moved to the outside of the first housing 200-1.

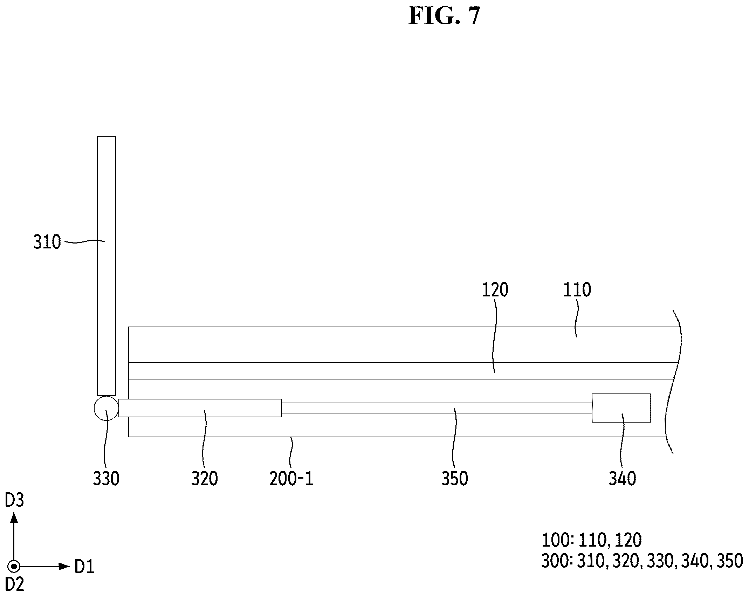

The first cover member 310, which is moved to the outside of the first housing 200-1 by the operation of the driver 340, may be rotated upward by the rotation member 330, as shown in FIG. 7. The first cover member 310 may be rotated upward in FIG. 7 either by being rotated manually by a user, or by placing a separate rotation driving unit (not shown) on the rotation member 330 so that the first cover member 310 may be rotated by the operation of the rotation driving unit.

Although not shown in FIG. 7, the second folding area FA2 may be located on the upper left side of the first housing 200-1 in FIG. 7 and the first cover member 310 is rotated upward in FIG. 7, so that the first cover member 310 may cover the second folding area FA2. Since the first cover member 310 covers the second folding area FA2, the second folding area FA2 can be effectively prevented from being damaged by external impact.

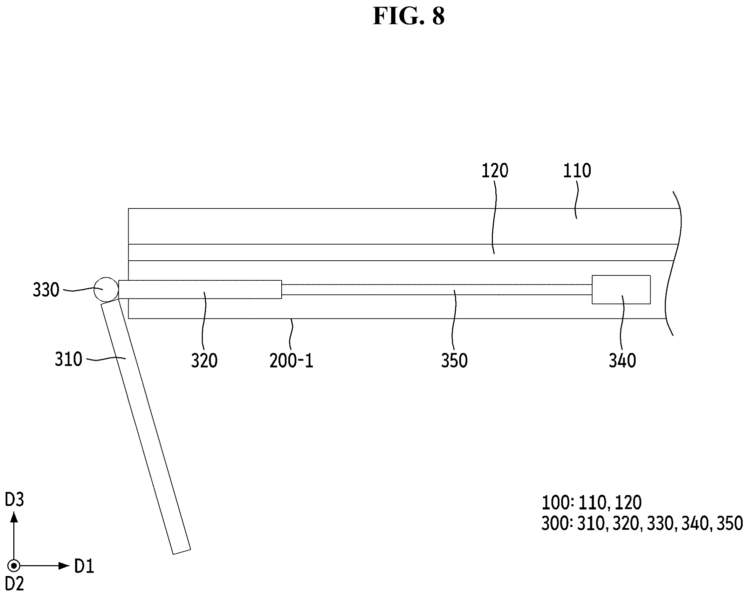

In addition, the first cover member 310 of the cover module 300 may be moved to the outside of the first housing 200-1 when the display module 100 is unfolded. As shown in FIG. 8, when the display module 100 is unfolded, if the first cover member 310 is moved to the outside of the first housing 200-1, the first cover member 310 may be rotated downward in FIG. 8.

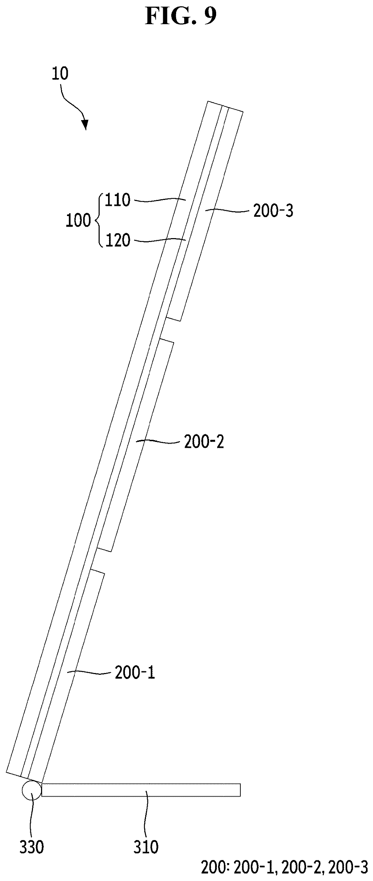

FIG. 9 is a view showing the cover module of the electronic device according to the first embodiment when it is used as a stand.

Referring to FIG. 9, when the first cover member 310 is moved to the outside of the first housing 200-1 and then is rotated downward as in FIG. 8 and fixed at the rotated state, the first cover member 310 may be used as a stand for the electronic device 10.

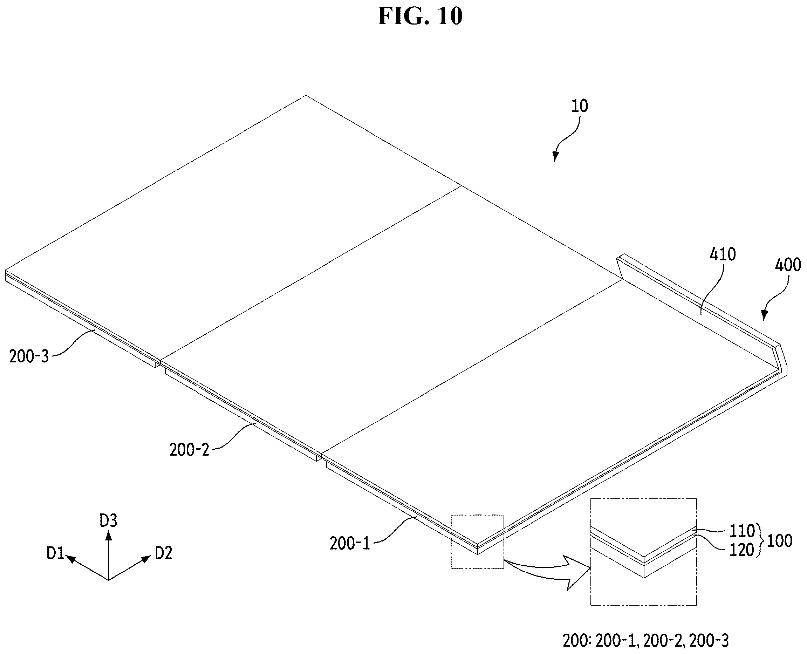

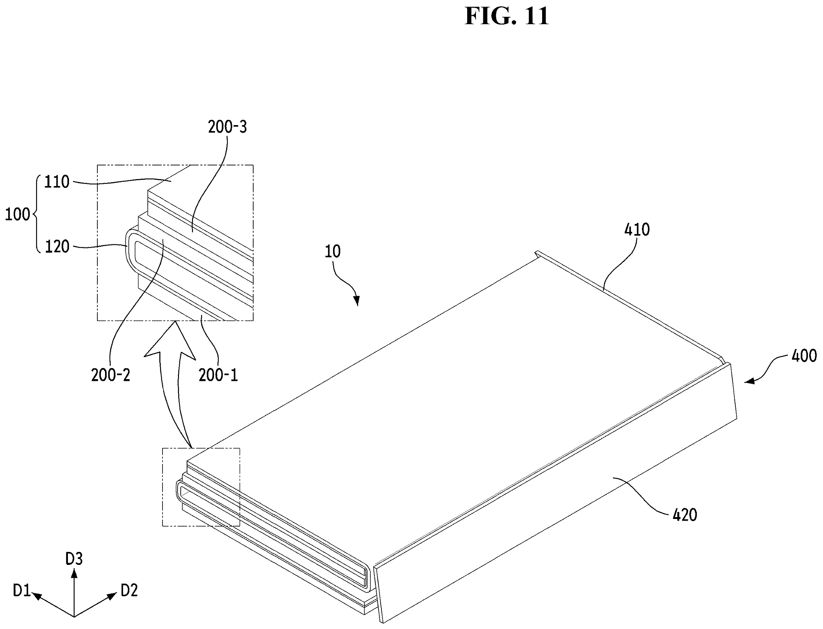

FIG. 10 is a perspective view showing an electronic device according to a second embodiment of the present disclosure when it is unfolded. FIG. 11 is a perspective view showing the electronic device according to the second embodiment of the present disclosure when it is folded.

Referring to FIGS. 10 and 11, an electronic device 10 according to the second embodiment of the present disclosure may include a display module 100, a housing 200, and a cover module 400. The display module 100 and the housing 200 are identical to those of the first embodiment; and, therefore, the redundant descriptions will be omitted.

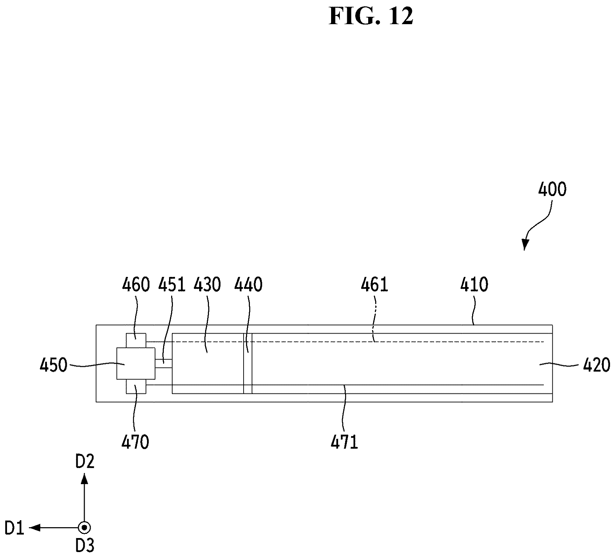

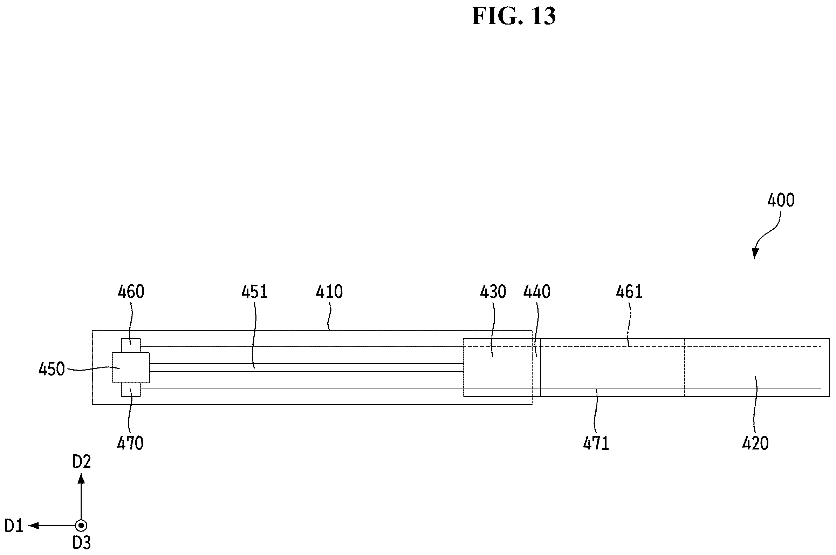

FIG. 12 is a cross-sectional view showing a part of the cover module of the electronic device according to the second embodiment of the present disclosure. FIGS. 13 to 15 are views showing an operating state of the cover module of FIG. 12. FIGS. 12 to 15 are views from a top of the display module 100.

Referring further to FIGS. 12 to 15, the cover module 400 may cover at least one of the plurality of folding areas FA1 and FA2. For example, the cover module 400 may cover the second folding area FA2 when the display module 100 is folded.

The cover module 400 may include a module housing 410, a first cover member 420, a second cover member 430, a rotation member 440, a main driver 450, a first auxiliary driver 460, a first wire 461, a second auxiliary driver 470, and a second wire 471.

The module housing 410 may be located on a side surface of the first housing 200-1. For example, the module housing 410 may be arranged on the side surface of the first housing 200-1 that intersects the first folding area FA1. The module housing 410 may be formed to have a height in the third direction D3 substantially equal to the thickness from the bottom of the first housing 200-1 to the top of the display module 100 in the third non-folding area NFA3 in the third direction D3 when the display module 100 is folded. Inside the module housing 410, a space may be formed for accommodating the first cover member 420, the second cover member 430, the rotation member 440, the main driver 450, the first auxiliary driver 460, the first wire 461, the second auxiliary driver 470 and the second wire 471.

The first cover member 420 may be moved from the inside of the module housing 410 to the outside of the module housing 410. The first cover member 420 may be provided as a plate having a certain thickness in the second direction D2. The length of the first cover member 420 in the third direction D3 of FIG. 11 may be substantially equal to the thickness from the bottom of the first housing 200-1 to the top of the display module 100 in the third non-folding area NFA3 in the third direction D3 when the display module 100 is folded. The length of the first cover member 310 in the second direction D2 of FIG. 11 may be substantially equal to the length of the second folding area FA2 in the second direction D2.

Since the length of the first cover member 420 is larger than the length of the module housing 410, the first cover member 420 may be formed as a plurality of unit plates overlapping one another when staying in the module housing 410. When the first cover member 420 is placed inside the module housing 410, the unit plates may overlap one another and accordingly the length may be decreased. When the first cover member 420 is moved to the outside of the module housing 410, the unit plates may spread out and accordingly the length may be increased.

The second cover member 430 may be connected to the first cover member 420 by the rotation member 440. The second cover member 430 may be placed inside the module housing 410. The second cover member 430 may be connected to a main driving shaft 451 of the main driver 450.

The rotation member 440 may be located between the first cover member 420 and the second cover member 430 to connect between the first cover member 420 and the second cover member 430. The rotation member 440 may connect the first cover member 420 with the second cover member 430 so that the first cover member 420 is rotatable.

The main driver 450 may be placed inside the module housing 410. The main driving shaft 451 of the main driver 450 may be connected to the second cover member 430. The main driver 450 may move the first cover member 420 from the inside to the outside of the module housing 410. The main driver 450 may be implemented as a linear motor or a linear actuator.

The first auxiliary driver 460 may be placed inside the module housing 410. The first auxiliary driver 460 may be connected to the first wire 461 to pull the first wire 461 or release the pulling of the first wire 461. The first auxiliary driver 460 may be placed near the main driver 450. The first auxiliary driver 460 may be provided as a linear motor or a linear actuator.

The first wire 461 may be connected to the first auxiliary driver 460 and the first cover member 420. The first wire 461 may be connected to a surface of the first cover member 420. For example, the first wire 461 may be connected to one of two surfaces of the first cover member 420 which is not in contact with the second folding area FA2 when the display module 100 is folded.

The second auxiliary driver 470 may be placed inside the module housing 410. The second auxiliary driver 470 may be connected to the second wire 471 to pull the second wire 471 or release the pulling of the second wire 471. The second auxiliary driver 470 may be placed near the main driver 450. The second auxiliary driver 470 may be provided as a linear motor or a linear actuator.

The second wire 471 may be connected to the second auxiliary driver 470 and the first cover member 420. The second wire 471 may be connected to the opposite surface of the first cover member 420. For example, the second wire 471 may be connected to the other one of the two surfaces of the first cover member 420 which is in contact with the second folding area FA2 when the display module 100 is folded.

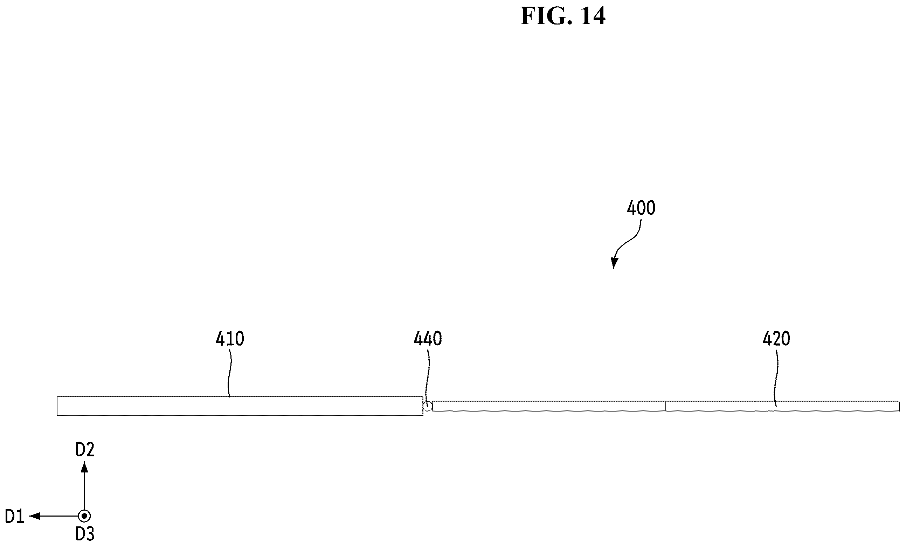

The operation of the cover module 400 will be described. When the display module 100 is unfolded, the first cover member 420 is located inside the module housing 410, as shown in FIG. 12. When the display module 100 is folded, as shown in FIGS. 13 and 14, the main driver 450 is operated so that the main driving shaft 451 is moved to the right side of FIG. 13. As the main driving shaft 451 is moved, the second cover member 430 connected to the main driving shaft 451 is moved to the right side of FIG. 13, and accordingly, the first cover member 420 is moved to the outside of the module housing 410. When the first cover member 420 is moved to the right side of FIG. 13, the first auxiliary driver 460 may pull the first wire 461. Since the first cover member 420 is moved to the outside of the module housing 410 by the main driver 450 while the first auxiliary driver 460 is pulling the first wire 461, the first cover member 420 may be moved to the right side of FIG. 13 without rotating.

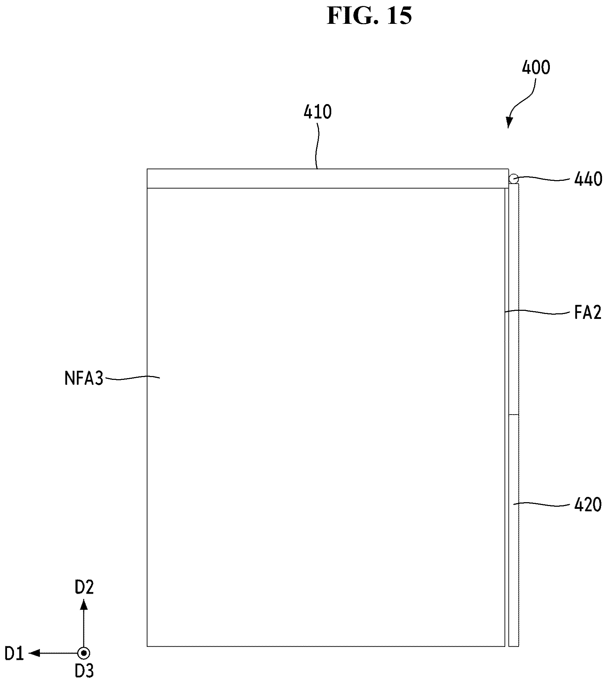

The first cover member 420, which is moved to the outside of the module housing 410 by the operation of the main driver 450, may be rotated downward, as shown in FIG. 15. The first cover member 420 may be rotated downward in FIG. 15 by the operation of the second auxiliary driver 470. For example, when the second auxiliary driver 470 is operated and the second wire 471 is pulled, the first cover member 420 may be rotated downward in FIG. 15. While the second auxiliary driver 470 is pulling the second wire 471, the first auxiliary driver 460 may release the pulling of the first wire 461.

Although not shown in FIG. 15, since the second folding area FA2 is located on the left side of the first cover member 420 in FIG. 15, the first cover member 420 rotated downward in FIG. 15 may cover the second folding area FA2. Since the first cover member 420 covers the second folding area FA2, the second folding area FA2 can be effectively prevented from being damaged by external impact.

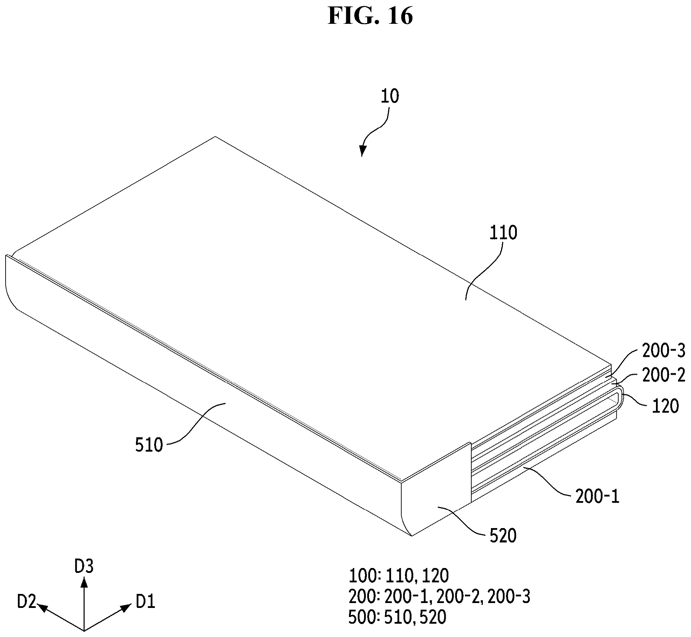

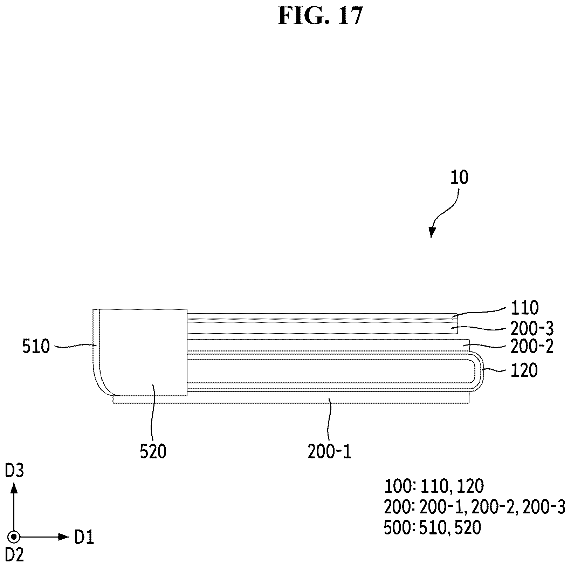

FIG. 16 is a perspective view showing the electronic device according to a third embodiment of the present disclosure when it is folded. FIG. 17 is a side view of the electronic device shown in FIG. 16.

Referring to FIGS. 16 and 17, an electronic device 10 according to the third embodiment of the present disclosure may include a display module 100, a housing 200, and a cover module 500. The display module 100 and the housing 200 are identical to those of the first embodiment; and, therefore, the redundant descriptions will be omitted.

The cover module 500 may cover at least one of the plurality of folding areas FA1 and FA2. For example, the cover module 500 may cover the second folding area FA2 when the display module 100 is folded. In addition, the cover module 500 may cover a part of the side surface of the electronic device 10 when the display module 100 is folded. The cover module 500 may include a first cover member 510 and a second cover member 520.

The first cover member 510 may be extended in the third direction D3 from a first housing 200-1 to cover the second folding area FA2. The first cover member 510 may be provided as a plate having a thickness. The length of the first cover member 510 in the third direction D3 in FIG. 16 may be substantially equal to the thickness from the bottom of the first housing 200-1 to the top of the display module 100 in the third non-folding area NFA3 in the third direction D3 when the display module 100 is folded. The length of the first cover member 510 in the second direction D2 of FIG. 16 may be substantially equal to the length of the second folding area FA2 in the second direction D2. As described above, since the first cover member 510 covers the second folding area FA2, the second folding area FA2 can be effectively prevented from being damaged by external impact.

The second cover member 520 may cover a part of the side surface of the electronic device 10. For example, the second cover member 520 may cover a part of the side surface of the first housing 200-1 that intersects the first folding area FA1. The length of the second cover member 520 in the first direction D1 may be smaller than the length of the first housing 200-1 in the first direction D1. The length of the second cover member 520 in the third direction D3 may be substantially equal to the thickness from the bottom of the first housing 200-1 to the top of the display module 100 in the third non-folding area NFA3 in the third direction D3 when the display module 100 is folded. Accordingly, the second cover member 520 may cover a part of the side surface of each of the second housing 200-2 and the third housing 200-3 that intersects the first folding area FA1 or the second folding area FA2. The second cover member 520 may be formed integrally with the first cover member 510. As such, since the second cover member 520 covers a part of each of the first housing 200-1, the second housing 200-2 and the third housing 200-3, it is possible to prevent a part of the display module 100 supported by the first housing 200-1, the second housing 200-2 and the third housing 200-3, and a part of the first housing 200-1, the second housing 200-2 and the third housing 200-3 from being damaged by external impact.

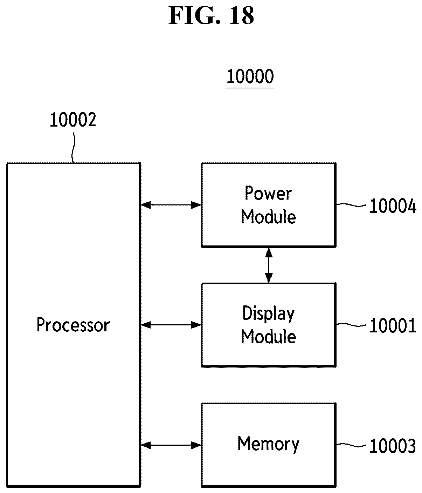

FIG. 18 is a block diagram of an electronic device according to an embodiment of the present disclosure.

Referring to FIG. 18, an electronic device 10000 according to an embodiment of the present disclosure may include a display module 10001, a processor 10002, a memory 10003, and a power module 10004.

The processor 10002 may include at least one of: a central processing unit (CPU), an application processor (AP), a graphic processing unit (GPU), a communication processor (CP), an image signal processor (ISP), and a controller.

The memory 10003 may store data information required for the operation of the processor 10002 or the display module 10001. When the processor 10002 executes an application stored in the memory 10003, an image data signal and/or an input control signal may be transmitted to the display module 10001. The display module 10001 may process the received signal and output image information through a display screen.

The power module 10004 may include a power supply module such as a power adapter and a battery device, and a power conversion module that converts the power supplied by the power supply module to generate power required for the operation of the electronic device 10000.

It should be understood, however, that the aspects and features of embodiments of the present disclosure are not restricted to the one set forth herein. The above and other aspects of the present disclosure will become more apparent to one of ordinary skill in the art to which the present disclosure pertains by referencing the claims, with equivalents thereof to be included therein.

## Claims

1. An electronic device (10) comprising:
a display module (100) comprising a plurality of folding areas (FA1, FA2) and non-folding areas (NFA1, NFA2, NFA3);
at least one housing (200), which supports the display module (100); and
a cover module (300, 400, 500), which covers at least one of the plurality of folding areas (FA1, FA2) when the display module (100) is in a folded state.

2. The electronic device (10) of claim 1, wherein the plurality of non-folding areas (NFA1, NFA2, NFA3) comprises a first non-folding area (NFA1), a second non-folding area (NFA2), and a third non-folding area (NFA3),
wherein the plurality of folding areas (FA1, FA2) comprises a first folding area (FA1) located between the first non-folding area (NFA1) and the second non-folding area (NFA2), and a second folding area (FA2) located between the second non-folding area (NFA2) and the third non-folding area (NFA3),
wherein the at least one housing (200) comprises a plurality of housings (200-1, 200-2, 200-3), and
wherein the plurality of housings (200-1, 200-2, 200-3) comprises a first housing (200-1), which supports the first non-folding area (NFA1), a second housing (200-2), which supports the second non-folding area (NFA2), and a third housing (200-3), which supports the third non-folding area (NFA3).

3. The electronic device (10) of claim 2, wherein, when the display module (100) is in the folded state, the third non-folding area (NFA3) is exposed to an outside and the second folding area (FA2) is out-folded, and
wherein the cover module (300, 400, 500) covers the second folding area (FA2) when the display module (100) is in the folded state, and the cover module (300, 400, 500) does not cover the second folding area (FA2) when the display module (100) is in an unfolded state.

4. The electronic device (10) of claim 3, wherein the cover module (300) comprises:
a first cover member (310), which moves from an inside of the first housing (200-1) to an outside of the first housing (200-1) to cover the second folding area (FA2) when the display module (100) is changed from the unfolded state to the folded state; and
a driver (340), which is located inside the first housing (200-1) and moves the first cover member (310) from the inside of the first housing (200-1) to the outside of the first housing (200-1).

5. The electronic device (10) of claim 4, wherein the cover module (300) further comprises:
a second cover member (320) connected to the driver (340); and
a rotation member (330) arranged between the first cover member (310) and the second cover member (320) and which rotates the first cover member (310).

6. The electronic device (10) of claim 5, wherein:
(i) the driver (340) moves the first cover member (310) to the outside of the first housing (200-1) when the display module (100) is changed from the unfolded state to the folded state, and
wherein the rotation member (330) rotates the first cover member (310) when the first cover member (310) is outside the first housing (200-1) such that the first cover member (310) covers the second folding area (FA2); and/or
(ii) the driver (340) moves the first cover member (310) to the outside of the first housing (200-1) when the display module (100) is changed from the unfolded state to the folded state, and
wherein the rotation member (330) rotates the first cover member (310) when the first cover member (310) is outside the first housing (200-1) such that the first cover member (310) is rotated toward the first housing (200-1).

7. The electronic device (10) of claim 3, wherein the cover module (400) comprises:
a module housing (410) located on a side surface of the first housing (200-1);
a first cover member (420), which moves from an inside of the module (410) housing to an outside of the module housing (410) to cover the second folding area (FA2) when the display module (100) is changed from the unfolded state to the folded state; and
a main driver (450), which is arranged inside the module housing (410) and moves the first cover member (420) from the inside of the module housing (410) to the outside of the module housing (410).

8. The electronic device (10) of claim 7, wherein the cover module (400) further comprises:
a second cover (430) member connected to the main driver (450); and
a rotation member (440) arranged between the first cover member (420) and the second cover member (430) and which rotates the first cover member (420).

9. The electronic device (10) of claim 8, wherein the cover module (400) further comprises:
a first wire (461) connected to the first cover member (420);
a first auxiliary driver (460) arranged inside the module housing (410) and connected to the first wire (461) to pull the first wire (461);
a second wire (471) connected to the first cover member (420); and
a second auxiliary driver (470) arranged inside the module housing (410) and connected to the second wire (471) to pull the second wire (471).

10. The electronic device (10) of claim 9, wherein the first wire (461) is connected to a first surface of the first cover member (420), and
wherein the second wire (471) is connected to a second surface of the first cover member (420) opposite to the first surface.

11. The electronic device (10) of claim 10, wherein the main driver (450) moves the first cover member (420) to the outside of the module housing (410) when the display module (100) is changed from the unfolded state to the folded state, and
wherein the rotation member (440) rotates the first cover member (420) when the first cover member (420) is outside the first housing (200-1) such that the first cover member (420) covers the second folding area (FA2).

12. The electronic device (10) of claim 11, wherein the main driver (450) moves the first cover member (420) to the outside of the module housing (410) while the first auxiliary driver (460) is pulling the first wire (461), and
wherein the first cover member (420) is rotated when the second auxiliary driver (470) pulls the second wire (471), optionally wherein the first auxiliary driver (460) releases the first wire (461) while the second auxiliary driver (470) is pulling the second wire (471).

13. The electronic device (10) of any one of claims 7 to 12, wherein:
(i) the side surface of the first housing (200-1) on which the module housing (410) is located intersects the first folding area (FA1), optionally wherein the first cover member (420) has a length substantially equal to a length of the second folding area (FA2); and/or
(ii) the module housing (410) has a height substantially equal to a thickness from a bottom of the first housing (200-1) to a top of the display module (100) in the third non-folding area (NFA3) when the display module (100) is in the folded state.

14. The electronic device (10) of claim 3, wherein the cover module (500) comprises:
a first cover member (510), which covers the second folding area (FA2) when the display module (100) is in the folded state; and
a second cover member (520), which covers a part of a side surface of the first housing (200-1) that intersects the first folding area (FA1).

15. The electronic device (10) of claim 14, wherein:
(i) the first cover member (510) has a length substantially equal to a length of the second folding area (FA2), and
wherein the first cover member (510) has a height substantially equal to a thickness from a bottom of the first housing (200-1) to a top of the display module (100) in the third non-folding area (NFA3) when the display module (100) is in the folded state; and/or
(ii) the second cover member (520) further covers a part of a side surface of each of the second housing (200-2) and the third housing (200-3) that intersects the second folding area (FA2) when the display module (100) is in the folded state, and
wherein the second cover member (520) has a height substantially equal to a thickness from a bottom of the first housing (200-1) to a top of the display module (100) in the third non-folding area (NFA3).
